# EUROPÄISCHE PATENTANMELDUNG

(11) **EP 2 151 610 A1**
(43) Veröffentlichungstag der Anmeldung: **10.02.2010**
(21) Anmeldenummer: 08013922.3
(22) Anmeldetag: 04.08.2008
(51) Int. Cl.: F16J 15/16, F16J 15/32

(54) **Radialwellendichtring mit einer quellfähigen Schmutzlippe**

(71) Anmelder: Carl Freudenberg KG, 69469 Weinheim (DE)
(72) Erfinder: Kritzer, Peter, 67147 Forst (DE); Heiland, Marc, 67549 Worms (DE); Viol, Michael, 69121 Heidelberg (DE)

(57) **Zusammenfassung**

Ein Radialwellendichtring mit mindestens einer Dichtlippe (1, 6), die durch Fluidbeaufschlagung gerichtet bewegbar ist, ist im Hinblick auf die Aufgabe, eine Anordnung zu schaffen, bei der eine Dichtlippe auch nach längerer Betriebsdauer einen mit Arbeitsfluid befüllten Innenraum gegen aus einem Außenraum eintretende Verschmutzungen zuverlässig abdichten kann, **dadurch gekennzeichnet, dass** der Dichtlippe (1, 6) ein quellfähiges Material (2) zur Bewegung in einer Vorzugsrichtung zugeordnet ist.

## Beschreibung

### Technisches Gebiet

Die Erfindung betrifft einen Redialwellendichtring mit mindestens einer Dichtlippe, die bei Fluidbeaufschlagung gerichtet bewegbar ist.

### Stand der Technik

Radialwellendichtringe der eingangs genannten Art sind aus dem Stand der Technik bereits bekannt. Radialwellendichtringe trennen einen Innenraum, der mit Arbeitsfluid, beispielsweise Öl, befüllt ist, von einem Außenraum ab.

Insbesondere sind Radialwellendichtringe bekannt, bei denen eine - vom Außenraum in Richtung Innenraum betrachtet - erste Dichtlippe eine zweite Dichtlippe abschirmt. Die zweite Dichtlippe dichtet dabei einen mit Arbeitsfluid befüllten Innenraum gegen einen Außenraum ab, wobei die erste Dichtlippe die zweite Dichtlippe gegen den Außenraum abschirmt. Der ersten Dichtlippe kommt dabei die Aufgabe zu, die zweite Dichtlippe vor Verschmutzungen zu schützen, Insbesondere soll verhindert werden, dass Partikel zwischen die zweite Dichtlippe und die Welle geraten und dadurch zu erhöhter Abrasion führen.

Des Weiteren kommt der ersten Dichtlippe die Aufgabe zu, die zweite Dichtlippe vor fluiden Medien zu schützen. Bei den aus dem Stand der Technik bekannten Radialwellendichtringen ist jedoch nachteilig, dass die erste Dichtlippe dauerhaft an der rotierenden Welle anliegt, so dass die erste Dichtlippe eine starke Abnutzung erfährt. Durch die Abnutzung der ersten Dichtlippe bilden sich dauerhaft Spalte aus, durch die Partikel oder Fluide hindurchtreten können, so dass die zweite Dichtlippe nach längerer Betriebsdauer nicht mehr durch die erste Dichtlippe geschützt werden kann. Des Weiteren kann die erste Dichtlippe nach längerer Betriebsdauer keine Dichtfunktion mehr erfüllen.

Zudem führt das dauerhafte Anliegen der ersten Dichtlippe an der Welle zu einer erhöhten Reibung, auch wenn deren Dichtfunktion nicht notwendig ist. Diese ständige Reibung hat eine erhöhte Verlustenergie zur Folge. Des Weiteren wird die Dichtlippe abgenutzt.

### Darstellung der Erfindung

Der Erfindung liegt daher die Aufgabe zu Grunde, eine Anordnung zu schaffen, bei der eine Dichtlippe auch nach längerer Betriebsdauer einen mit Arbeitsfluid befüllten Innenraum gegen aus einem Außenraum eintretende Verschmutzungen zuverlässig abdichten kann.

Erfindungsgemäß wird die voranstehende Aufgabe durch einen Radialwellendichtring mit den Merkmalen des Patentanspruchs 1 gelöst.

Danach ist der Radialwellendichtring **dadurch gekennzeichnet, dass** zumindest einer Dichtlippe ein quellfähiges Material zur Bewegung in eine Vorzugsrichtung zugeordnet ist.

Erfindungsgemäß ist zunächst erkannt worden, dass eine Dichtlippe nicht ständig unter einem hohen Druck an einer rotierenden Welle anliegen muss, um zuverlässig abzudichten oder eine weitere Dichtlippe zu schützen, wenn das von außen anstehende Fluid nur zeitweise ansteht. Des Weiteren ist erkannt worden, dass ein quellfähiges Material eine Dichtlippe in eine Vorzugsrichtung, z. B. in Richtung der Oberfläche der Welle, bewegen kann, sobald dies notwendig ist. Ganz konkret ist erkannt worden, dass ein quellfähiges Material bei Beaufschlagung mit einem Fluid aus dem Außenraum eine Ausdehnung erfährt, welche derart gerichtet werden kann, dass eine erste Dichtlippe verstärkt gegen die Welle oder eine geeignet angebrachte Gegenlauffläche gepresst wird und die zweite Dichtlippe zuverlässig abschirmt. Sobald beispielsweise Wasser aus dem Außenraum auf die erste Dichtlippe auftrifft, wird das quellfähige Material von einer ersten Ausdehnung in eine zweite Ausdehnung verbracht, welche die erste Dichtlippe in der Vorzugsrichtung gegen die Welle presst. Hierdurch wird die zweite Dichtlippe bei Bedarf durch die erste Dichtlippe geschützt. Da die erste Dichtlippe nur im aufgequollenen Zustand fest an der Welle anliegt, wird deren Verschleiß gemindert. Hierdurch kann die zweite Dichtlippe auch nach langer Betriebsdauer zuverlässig durch die erste Dichtlippe geschützt werden. Bei einer Anordnung mit nur einer Dichtlippe kann deren Anpressdruck an die Welle durch das quellfähige Material gesteuert werden. Die Dichtlippe kann dann nur bei Bedarf auch nach längerer Betriebdauer zuverlässig an die Welle gepresst werden, um zuverlässig abzudichten.

Folglich ist die eingangs genannte Aufgabe gelöst.

Vor diesem Hintergrund könnte das quellfähige Material in einer Ausnehmung der Dichtlippe angeordnet sein. Die Ausnehmung kann derart geometrisch ausgeformt sein, dass das quellfähige Material die Dichtlippe problemlos in eine Vorzugsrichtung drücken oder pressen kann.

Das quellfähige Material könnte als Ring ausgestaltet sein. Durch die Ausgestaltung als Ring ist das quellfähige Material umfänglich an der Dichtlippe angeordnet und kann diese umfänglich mit gleichem Druck gegen eine Welle pressen.

Die Dichtlippe könnte zumindest teilweise aus dem quellfähigen Material gefertigt sein. Durch diese konkrete Ausgestaltung kann die Dichtlippe einstückig gefertigt werden. Vor diesem Hintergrund ist konkret denkbar, dass die Dichtlippe aus einem quellfähigen Elastomer gefertigt ist.

Das quellfähige Material könnte aus Elastomeren aufgebaut sein. So weisen polare Elastomere wie NBR oder HNBR gegenüber wässrigen Medien eine hohe Quellung auf, wohingegen unpolare Elastomere wie EPDM eine starke Quellung gegenüber unpolaren Medien wie Öl zeigen.

Das quellfähige Material könnte Superabsorber enthalten. Superabsorber zeichnen sich durch ein rasches und hohes Quellvermögen aus, wodurch eine Dichtlippe mit kurzer Reaktionszeit gegen die Welle gepresst werden kann.

Das quellfähige Material könnte aus Thermoplasten oder thrermoplastischen Elastomeren gefertigt sein.

Das quellfähige Material könnte reversibel von einer Ausdehnung im aufgequollenen Zustand in eine Ausdehnung im nicht aufgequollenen Zustand überführbar sein. Durch diese konkrete Ausgestaltung ist es möglich, dass die Dichtlippe im nicht aufgequollenen Zustand des Materials nur mit geringem Anpressdruck an der Welle anliegt oder sogar einen geringen Spalt zu dieser ausbildet. Sobald die Dichtlippe mit Fluid aus dem Außenraum beaufschlagt wird, wird die Dichtlippe mit höherem Anpressdruck gegen die Welle gepresst. Da dieser Prozess umkehrbar ist, kann die Dichtlippe als erste Dichtlippe, nämlich als Schmutzlippe, wahlweise zu einer zweiten Dichtlippe zugeschaltet werden.

Dem quellfähigen Material könnte ein Heizdraht zugeordnet sein. Durch diese konkrete Ausgestaltung ist es möglich, das quellfähige Material vom aufgequollenen Zustand rasch in den nicht aufgequollenen Zustand zu verbringen, da der Heizdraht durch Verdampfung eines Fluids zur schnelleren Abnahme der Quellung beitragen kann.

Zu der ersten Dichtlippe könnte eine zweite Dichtlippe in Reihe angeordnet sein. Durch diese konkrete Ausgestaltung ist es möglich, dass die zweite Dichtlippe einen mit Arbeitsfluid wie Öl befüllten Innenraum gegen einen Außenraum abdichtet. Die erste Dichtlippe ist in diesem Fall als Schmutzlippe ausgestaltet. Vor diesem Hintergrund könnte in den Zwischenraum zwischen beiden Dichtlippen Fett eingebracht sein. Wenn ein vom Außenraum kommendes Fluid mit abrasiven Partikeln verschmutzt ist, bewirkt das Fett, dass diese Partikel im Fett eingelagert werden und somit nicht in den Innenraum gelangen können.

Eine Anordnung könnte einen Radialwellendichtring der hier beschriebenen Art aufweisen, wobei eine zweite Dichtlippe unter Anlage an einer Welle einen mit Arbeitsfluid befüllten Innenraum gegen einen Außenraum abdichtet und wobei eine erste Dichtlippe die zweite Dichtlippe gegen den Außenraum abschirmt. Bei einer solchen Anordnung ist es möglich, von außen in den Radialwellendichtring eindringendes Fluid wirkungsvoll abzuschirmen und die zweite Dichtlippe vor dem von außen eindringenden Fluid zu schützen.

In den Zwischenraum zwischen die Dichtlippen könnte Fett eingebracht sein. Fett schützt die zweite Dichtlippe zusätzlich vor abrasiven Partikeln von außen, die sonst besonders während der Reaktionszeit der ersten Dichtlippe ungehindert zu der zweiten Dichtlippe gelangen könnten.

Es gibt nun verschiedene Möglichkeiten, die Lehre der vorliegenden Erfindung auf vorteilhafte Weise auszugestalten und weiterzubilden. Dazu ist einerseits auf die nachgeordneten Ansprüche, andererseits auf die nachfolgende Erläuterung bevorzugter Ausführungsbeispiele der Erfindung anhand der Zeichnung zu verweisen.

In Verbindung mit der Erläuterung der bevorzugten Ausführungsbeispiele der Erfindung anhand der Zeichnung werden auch im Allgemeinen bevorzugte Ausgestaltungen und Weiterbildungen der Lehre erläutert.

### Kurzbeschreibung der Zeichnung

In der Zeichnung zeigen
- Fig. 1: einen Radialwellendichtring, bei der eine erste Dichtlippe als Schmutzlippe mit einer zweiten Dichtlippe in Reihe geschaltet ist,
- Fig. 2: einen Radialwellendichtring, bei welchem die erste Dichtlippe gegen eine Ringwandung presst,
- Fig. 3: eine Dichtlippe, die eine U-förmige Ausnehmung aufweist, in der quellfähiges Material aufgenommen ist,
- Fig. 4: einen Radialwellendichtring mit einer ersten Dichtlippe, der ein ringförmiges quellfähiges Material zugeordnet ist,
- Fig. 5: einen Radialwellendichtring mit einer ersten Dichtlippe, die unter Vorspannung einen Spalt freigibt,
- Fig. 6: eine Dichtlippe, die mehrere Rippen aufweist,
- Fig. 7: eine Dichtlippe, die mehrere Rippen aufweist,
- Fig. 8: eine Dichtlippe, an deren einem Ende ein ringförmiges quellfähiges Material angeordnet ist,
- Fig. 9: eine Dichtlippe, die in Umfangsrichtung mehrere Rippen aufweist, wobei an einem Ende der Dichtlippe ein quellfähiges Material angeordnet ist, und
- Fig. 10: einen Radialwellendichtring, bei welchem die erste Dichtlippe gegen eine Ringwandung presst.

### Ausführung der Erfindung

Alle Figuren der Zeichnung zeigen Schnittansichten längs der Achse der Welle 3.

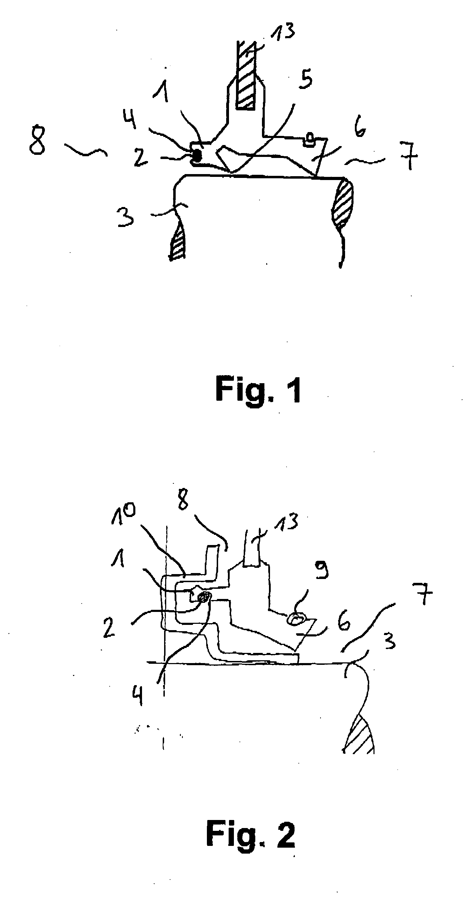

Fig. 1 zeigt in einer Schnittansicht einen Radialwellendichtring mit mindestens einer ersten Dichtlippe 1, der ein quellfähiges Material 2 zur Bewegung der ersten Dichtlippe 1 in einer Vorzugsrichtung gegen die Welle 3 zugeordnet ist. Das quellfähige Material 2 ist in einer Ausnehmung 4 der ersten Dichtlippe 2 angeordnet. Dabei ist das quellfähige Material 2 als Ring ausgestaltet. Das quellfähige Material 2 ist reversibel von einer Ausdehnung im aufgequollenen Zustand in eine Ausdehnung im nicht aufgequollenen Zustand überführbar. Sobald das quellfähige Material 2 aufquillt, wird die erste Dichtlippe 1 gegen die Welle 3 gepresst, so dass der Spalt 5 zwischen der ersten Dichtlippe 1 und der Welle 3 verschlossen wird.

Zu der ersten Dichtlippe 1 ist eine zweite Dichtlippe 6 in Reihe geschaltet, welche einen mit Arbeitsfluid befüllten Innenraum 7 gegen einen Außenraum 8 abdichtet. Dabei schirmt die erste Dichtlippe 1 die zweite Dichtlippe 6 gegen Fluide ab, die aus dem Außenraum 8 gegen die zweite Dichtlippe 6 strömen können. Die erste Dichtlippe 1 ist als Schmutzlippe ausgestaltet.

Fig. 1 zeigt eine Anordnung mit einem Radialwellendichtring, wobei eine zweite Dichtlippe 6 einen mit Arbeitsfluid befüllten Innenraum 7 gegen einen Außenraum 8 abdichtet. Der Innenraum 7 ist mit dem Arbeitsfluid Öl befüllt. Die erste Dichtlippe 1 schirmt die zweite Dichtlippe 6 gegen den Außenraum 8 ab. Ganz konkret verhindert die erste Dichtlippe 1, dass Fluide oder Partikel aus dem Außenraum 8 gegen die zweite Dichtlippe 6 strömen können, indem das quellfähige Material 2 bei Fluidbeaufschlagung durch Fluid aus dem Außenraum aufquillt und dadurch den Spalt 5 unter relativ starker Pressung gegen die Welle 3 verschließt.

Fig. 2 zeigt einen Radialwellendichtring mit einer zweiten Dichtlippe 6, die durch eine Feder 9 gegen die Welle 3 oder auf die auf der Welle 3 aufgebrachte Ringwandung 10 gepresst wird. Der Radialwellendichtring weist eine erste Dichtlippe 1 auf, die ein ringförmiges quellfähiges Material 2 in einer Ausnehmung 4 aufweist. Sobald das quellfähige Material 2 aufquillt, wird die erste Dichtlippe 1 gegen eine Ringwandung 10 gepresst, so dass keine Fluide aus dem Außenraum 8 gegen die zweite Dichtlippe 6 strömen können. In Fig. 2 ist die erste Dichtlippe 1 als Schmutzlippe ausgestaltet. Das quellfähige Material 2 kann dabei vorteilhafter Weise vor der Dichtlippe 1 platziert sein. Ein Platzieren nach der Dichtlippe 1 hat den Vorteil, dass nur erhebliche Mengen des Fluids zu einem Quellen führen. Ein Anspringen z.B. schon durch Kondensationswasser wäre hiermit ausgeschlossen.

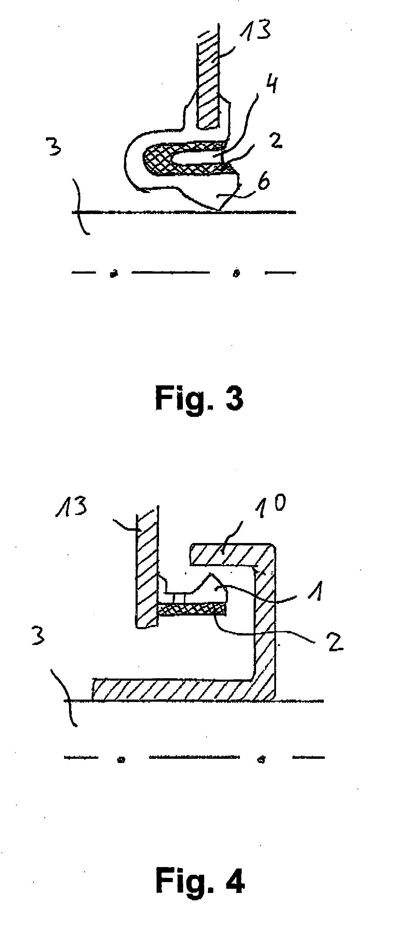

Fig. 3 zeigt eine Dichtlippe 6 mit einem U-förmig ausgebildeten quellfähigen Material 2, welches in einer U-förmigen Ausnehmung 4 in der Dichtlippe 6 angeordnet ist. Die Dichtlippe 6 könnte auch als erste Dichtlippe 1 eingesetzt werden, hinter der eine weitere Dichtlippe 6 platziert ist.

Fig. 4 zeigt einen Radialwellendichtring mit einer ersten Dichtlippe 1, der ein ringförmiges quellfähiges Material 2 zugeordnet ist. Die erste Dichtlippe 1 wird bei Aufquellen des quellfähigen Materials 2 gegen eine Ringwandung 10 gepresst. Dabei ist das quellfähige Material 2 als Ring radial innen auf der ersten Dichtlippe 1 angeordnet, die der Ringwandung 10 abgewandt ist. Die erste Dichtlippe 1 besteht zumindest teilweise aus einem Material, das ein geringeres Quellvermögen zeigt als das quellfähige Material 2. Kleinere Ausnehmungen in diesem Material geringeren Quellvermögens sorgen dafür, dass das die Quellung verursachende Fluid das quellfähige Material 2 passieren kann ohne die Dichtstelle zu passieren.

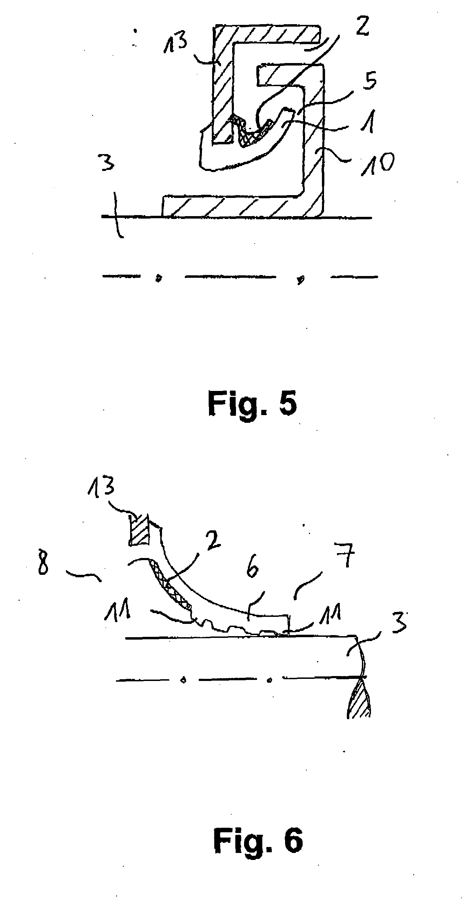

Fig. 5 zeigt einen Radialwellendichtring mit einer ersten Dichtlippe 1, die unter Vorspannung einen Spalt 5 zwischen einer Ringwandung 10 und sich ausbildet. In einer Kuhle der ersten Dichtlippe 1 ist ein quellfähiges Material 2 angeordnet, welches bei Aufquellen die erste Dichtlippe 1 entgegen ihrer Vorspannung gegen die Ringwandung 10 presst. Die Ringwandung 10 in den Fig. 4 und 5 ist als Gehäusewand einer Kassettendichtung ausgestaltet.

Fig. 5 zeigt eine axial wirkende Dichtlippe 1, die durch das Quellen eines quellfähigen Materials 2 gegen eine Gegenlauffläche an einer Ringwandung 10 gepresst wird und dabei den Spalt 5 schließt bzw. den Anpressdruck der Dichtlippe 1 gegen die Ringwandung 10 erhöht. Das quellfähige Material 2 ist in Umfangrichtung an mehreren Stellen unterbrochen.

Fig. 6 zeigt eine Dichtlippe 6, die mehrere Rippen 11 aufweist, die als Förderrippen ausgestaltet sind. An der Dichtlippe 6 ist ein quellfähiges Material 2 angeordnet, welches beim Aufquellen weitere Rippen 10 der Dichtlippe 6 gegen die Welle 3 presst. Hierdurch wird die Dichtwirkung erhöht. Eine bereits leicht abgenutzte Dichtlippe 6 kann dann verstärkt gegen die Welle 3 gepresst werden, wenn die Gefahr des Eintretens von Fluid aus dem Außenraum 8 droht. Die Dichtlippe 6 gemäß Fig. 6 kann in Alleinstellung, ohne Schmutzlippe im Radialwellendichtring angeordnet sein.

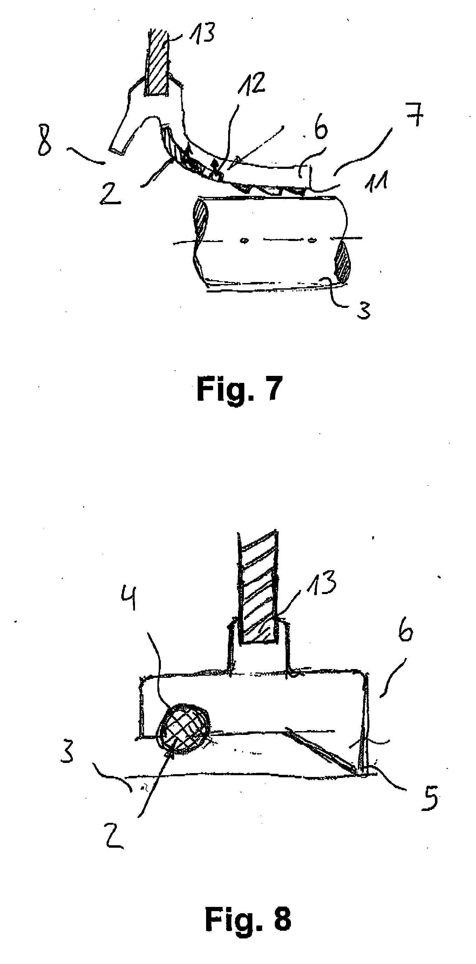

Fig. 7 zeigt einen Radialwellendichtring mit einer Dichtlippe 6, die mehrere Rippen 11 aufweist. Die Dichtlippe 6 weist ein quellfähiges Material 2 auf, welches auf der der Welle 3 zugeordneten Seite der Dichtlippe 6 streifenförmig umlaufend angeordnet ist. Des Weiteren ist der Dichtlippe 6 auf dieser Seite ein Material 12 zugeordnet, welches sich in Öl, einem Arbeitsfluid, auflöst. Sobald sich das Material 12 auflöst, werden weitere Rippen 11 gegen die Welle 3 bewegt. Bei einer Leckage kann dann aus dem Innenraum 7 austretendes Öl dafür sorgen, dass die Dichtlippe 6 stärker gegen die Welle 3 gepresst wird. Hierdurch wird die Leckage unterdrückt. Des Weiteren kann die Dichtlippe 6 durch das quellfähige Material 2 verstärkt gegen die Welle 3 gepresst werden, wenn die Gefahr des Eintretens von Fluid aus dem Außenraum 8 droht. Die Dichtlippe 6 gemäß Fig. 7 kann in Alleinstellung, ohne Schmutzlippe, im Radialwellendichtring angeordnet sein.

Fig. 8 zeigt eine Dichtlippe 6, deren eines Ende an der Welle 3 unter Ausbildung eines Spalts 5 anliegt. Dabei ist an deren anderem Ende ein quellfähiges Material 2 als Ring in einer Ausnehmung 4 eingepresst. Beim Aufquellen des quellfähigen Materials 2 entsteht eine Kippwirkung, die dazu führt, dass das dem quellfähigen Material 2 abgewandte Ende gegen die Welle 3 gepresst wird. Sobald ein Fluid durch den zwischen Dichtlippe 6 und Welle 3 gebildeten Spalt 5 hindurchdringt oder aus der entgegengesetzten Richtung auf das quellfähige Material 2 trifft, quillt das quellfähige Material 2 auf. Hierdurch wird eine radiale Kraft vom quellfähigen Material 2 gegen die Welle 3 ausgeübt, welche die Dichtlippe 6 gegen die Welle 3 presst. In Fig. 8 ist die Ausbildung einer Hebel- oder Kippwirkung gezeigt. Um einen Angelpunkt am Träger 13 wird das Ende, an dem das quellfähige Material 2 angeordnet ist, in radialer Richtung von der Welle 3 weg und das andere Ende in radialer Richtung zur Welle 3 hinbewegt. Die Dichtlippe 6 gemäß Fig. 8 kann in Alleinstellung, ohne Schmutzlippe im Radialwellendichtring angeordnet sein.

Der gesamte elastomere Körper in Fig. 8 ist in radial aufgedehntem Zustand. Dies wird z.B. dadurch erreicht, dass der elastomere Körper beim Vulkanisationsprozess an den Träger 13 geklebt wird. Durch im Vulkanisationsprozess entstehenden Materialschrumpf und Temperaturschrumpf ist der elastomere Körper im Betriebszustand unter Spannung. Insbesondere ziehen die beiden Enden des Körpers Richtung Welle 3. Durch die Anbindung an den Träger 13 entsteht ein entgegengesetztes und etwa gleich großes Kippmoment. Die rechte Seite erzeugt ein Kippmoment im Uhrzeigersinn, die linke Seite ein Kippmoment gegen den Uhrzeigersinn. Bei Quellung des quellfähigen Materials 2 entsteht ein drittes Kippmoment, dieses ist auch im Uhrzeigersinn gerichtet. Damit wird das durch die rechte Seite erzeugte Kippmoment nicht mehr kompensiert und dieser Teil kann sich gegen die Welle drücken. Diese Ausgestaltung kann auch dazu verwendet werden, bei Drehung der Dichtlippe 6 eine Verstärkung der Anpressung zu erreichen, wenn es sich bei dem quellfähigen Material 2 um ein schweres Material handelt.

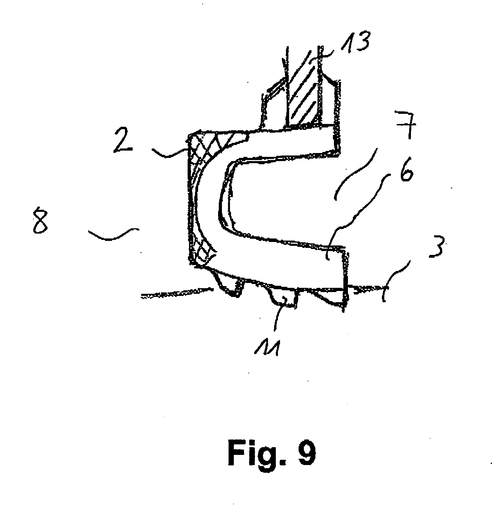

Fig. 9 zeigt eine Dichtlippe 6 mit mehreren Rippen 11, wobei auf der dem Innenraum 7 abgewandten Seite der Dichtlippe 6 ein quellfähiges Material 2 angeordnet ist. Beim Aufquellen des quellfähigen Materials 2 werden einzelne Rippen 11 nacheinander gegen die Welle 3 gepresst. Die Dichtlippe 6 gemäß Fig. 9 kann in Alleinstellung, ohne Schmutzlippe, im Radialwellendichtring angeordnet sein.

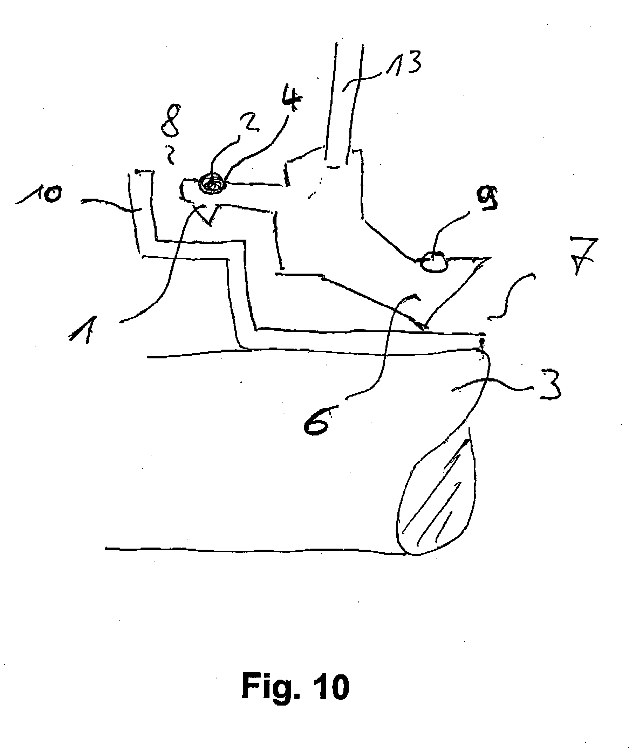

Fig. 10 zeigt einen Radialwellendichtring mit einer zweiten Dichtlippe 6, die durch eine Feder 9 gegen die Welle 3 bzw. auf die auf der Welle aufgebrachte Ringwandung 10 gepresst wird. Der Radialwellendichtring weist eine erste Dichtlippe 1 auf, die ein ringförmiges quellfähiges Material 2 in einer Ausnehmung 4 aufweist. Sobald das quellfähige Material 2 aufquillt, wird die erste Dichtlippe 1 gegen eine Ringwandung 10 gepresst, so dass keine Fluide aus dem Außenraum 8 gegen die zweite Dichtlippe 6 strömen können. In Fig. 10 ist die erste Dichtlippe 1 als Schmutzlippe ausgestaltet. Das quellfähige Material 2 ist in Fig. 10 im Gegensatz zu Fig. 2 vor der Dichtlippe 1 platziert, so dass eine schnelle Reaktion auf von außen eindringendes Fluid gewährleistet ist.

Das hier beschriebene quellfähige Material 2 kann als quellfähiges Elastomer ausgestaltet sein. Des Weiteren kann das quellfähige Material 2 Superabsorber aufweisen, welche ein rasches Quellvermögen zeigen und dadurch die Dichtlippen 1, 6 schnell gegen die Welle 3 oder eine Ringwandung 10 pressen.

Im Sinne dieser Erfindung ist eine mit dem Bezugszeichen 1 bezeichnete Dichtlippe 1 eine Schmutzlippe, der - vom Außenraum 8 zum Innenraum 7 betrachtet - eine zweite Dichtlippe nachfolgt. Eine mit dem Bezugszeichen 6 bezeichnete Dichtlippe kann in Alleinstellung - ohne Schmutzlippe - eingesetzt werden und ist eine dynamische Dichtlippe, die dauerhaft an der Welle 3 anliegen soll, um ein Arbeitsfluid dauerhaft im Innenraum 7 zu halten.

Hinsichtlich weiterer vorteilhafter Ausgestaltungen und Weiterbildungen der erfindungsgemäßen Lehre wird einerseits auf den allgemeinen Teil der Beschreibung und andererseits auf die beifügten Patentansprüche verwiesen.

Abschließend sei ganz besonders hervorgehoben, dass die zuvor gewählten Ausführungsbeispiele lediglich zur Erörterung der erfindungsgemäßen Lehre dienen, diese jedoch nicht auf diese Ausführungsbeispiele einschränken.

## Patentansprüche

1. Radialwellendichtring mit mindestens einer Dichtlippe (1, 6), die durch Fluidbeaufschlagung gerichtet bewegbar ist,
**dadurch gekennzeichnet, dass** der Dichtlippe (1, 6) ein quellfähiges Material (2) zur Bewegung in einer Vorzugsrichtung zugeordnet ist.

2. Radialwellendichtring nach Anspruch 1, **dadurch gekennzeichnet, dass** das quellfähige Material (2) in einer Ausnehmung (4) der Dichtlippe (1, 6) angeordnet ist.

3. Radialwellendichtring nach Anspruch 1 oder 2, **dadurch gekennzeichnet, dass** das quellfähige Material (2) als Ring ausgestaltet ist.

4. Radialwellendichtring nach einem der Ansprüche 1 bis 3, **dadurch gekennzeichnet, dass** die Dichtlippe (1, 6) zumindest teilweise aus dem quellfähigen Material (2) gefertigt ist.

5. Radialwellendichtring nach einem der Ansprüche 1 bis 4, **dadurch gekennzeichnet, dass** das quellfähige Material (2) als quellfähiges Elastomer ausgestaltet ist.

6. Radialwellendichtring nach einem der Ansprüche 1 bis 5, **dadurch gekennzeichnet, dass** das quellfähige Material (2) Superabsorber enthält.

7. Radialwellendichtring nach einem der Ansprüche 1 bis 6, **dadurch gekennzeichnet, dass** das quellfähige Material (2) als quellfähiges thermoplastisches Elastomer ausgestaltet ist.

8. Radialwellendichtring nach einem der Ansprüche 1 bis 4 oder 6, **dadurch gekennzeichnet, dass** das quellfähige Material (2) als quellfähiger Thermoplast ausgestaltet ist.

9. Radialwellendichtring nach einem der Ansprüche 1 bis 8, **dadurch gekennzeichnet, dass** das quellfähige Material (2) reversibel von einer Ausdehnung im aufgequollenen Zustand in eine Ausdehnung im nicht aufgequollenen Zustand überführbar ist.

10. Radialwellendichtring nach einem der Ansprüche 1 bis 9, **dadurch gekennzeichnet, dass** dem quellfähigen Material (2) ein Heizdraht zugeordnet ist.

11. Radialwellendichtring, nach einem der voranstehenden Ansprüche, **dadurch gekennzeichnet, dass** zu einer ersten Dichtlippe (1) eine zweite Dichtlippe (6) in Reihe angeordnet ist.

12. Anordnung, umfassend einen Radialwellendichtring nach einem der voranstehenden Ansprüche, wobei eine zweite Dichtlippe (6) unter Anlage an einer Welle (3) einen mit Arbeitsfluid befüllten Innenraum (7) gegen einen Außenraum (8) abdichtet und wobei eine erste Dichtlippe (1) die zweite Dichtlippe (6) gegen den Außenraum (8) abschirmt und dabei als Schmutzlippe fungiert.

13. Anordnung nach Anspruch 12, **dadurch gekennzeichnet, dass** ein zwischen den Dichtlippen (1) und (6) ausgebildeter Zwischenraum mit Fett oder einem hochviskosen Öl gefüllt ist.
